# EUROPEAN PATENT APPLICATION

(11) **EP 2 741 178 A1**
(43) Date of publication of application: **11.06.2014**
(21) Application number: 12196123.9
(22) Date of filing: 07.12.2012
(51) Int. Cl.: G06F 3/0354, G06F 3/038

(54) **Method and apparatus pertaining to gestures with respect to a stylus**

(71) Applicant: BlackBerry Limited, Waterloo, ON N2K 0A7 (CA)
(72) Inventor: Mercea, Cornel, Waterloo, Ontario N2L 3W8 (CA); Mankowski, Peter, Waterloo, Ontario N2L 3W8 (CA); Idzik, Jacek S., Waterloo, Ontario N2L 3W8 (CA)
(74) Representative: Greenaway, Martin William

(57) **Abstract**

An apparatus and method pertaining to detecting a user's gesture(s) with respect to a stylus and the wireless transmission of information regarding that gesture. The detected gesture can comprise, for example, movement of a user's finger along the stylus and/or displacement of a user's finger from contact with the stylus.

## Description

### Field of Technology

The present disclosure relates to styli employed as a user interface to a corresponding electronic device.

### Background

Various styli are known and typically serve in conjunction with a scribing surface that is configured to work with a corresponding stylus. Generally speaking, a stylus is typically a hand-held writing utensil that often (but not exclusively) has a pencil-like elongated form factor and that includes at least one pointed end configured to interact with the scribing surface. Using a stylus as an input mechanism with, for example, a display offers a variety of advantages over a fingertip including the opportunity for increased precision as well as an expression modality that accords with the user's own past experience with a pencil or pen.

In most cases such a stylus can at least serve to cause a display of a so-called electronic-ink line that tracks and corresponds to movement of the stylus on the scribing surface. Such an input modality permits the user to enter text, for example, or to draw an image.

In some cases the stylus can also be manipulated to effect a so-called gesture. For example, the stylus tip can be tapped once, twice, or more as desired on a particular portion of the scribing surface to, for example, select or click upon a displayed virtual button or the like. As another example the scribing tip of the stylus can be slide along the surface of the scribing surface (for purposes other than drawing a corresponding line). As yet another example, the scribing surface may be configured to detect when the stylus is raised a short distance thereabove and to interpret such an action (at least under some operating circumstances) as a corresponding gesture.

As useful as the foregoing stylus-based user-interface modalities may be, existing approaches in these regards do not necessarily meet the needs of all users and/or the needs of all application settings.

### Brief Description of the Drawings

FIG. 1 is a flow diagram in accordance with the disclosure.

FIG. 2 is a block diagram in accordance with the disclosure.

FIG. 3 is a detail side-elevational view in accordance with the disclosure.

FIG. 4 is a detail side-elevational view in accordance with the disclosure.

FIG. 5 is a detail side-elevational view in accordance with the disclosure.

FIG. 6 is a detail side-elevational view in accordance with the disclosure.

FIG. 7 is a detail side-elevational view in accordance with the disclosure.

FIG. 8 is a block diagram in accordance with the disclosure.

### Detailed Description

The following describes an apparatus and method pertaining to detecting a user's gesture(s) with respect to a stylus and the wireless transmission of information regarding that gesture. The detected gesture can comprise, for example, movement of a user's finger along the stylus and/or displacement of a user's finger from contact with the stylus.

These teachings will accommodate a variety of detection approaches. By one approach, for example, the stylus can include a plurality of electrically-conductive sensors (including, by way of example, capacitively-based sensors) that serve in these regards. By another approach, employed in lieu of the foregoing or in combination therewith, movement of the user's finger(s) with respect to the stylus can be detected using, at least in part, one or more optical-based sensor.

These teachings are also highly flexible in practice. As one example in these regards, the foregoing gesture information can be wirelessly transmitted along with other information. This other information can include, for example, information regarding one or more stylus operating circumstances (such as, but not limited to, a present angle of inclination of the stylus, rotation of the stylus about its longitudinal axis, and so forth).

So configured, simple and conveniently executed gestures between the user's finger(s) and the stylus can serve as gesture-based information that the stylus provides to the scribing surface to thereby further enrich the information-entry process. For example, while drawing a picture with the stylus, sliding-based gestures (of a finger along the barrel of the stylus, for example) can serve to conveniently and quickly permit the user to control the rendered line thickness of the corresponding electronic-ink line. As another example, such gestures can permit the user to easily select and control the color of the corresponding electronic-ink line.

These teachings are readily employed with any of a wide variety of stylus types including, but not limited to, capacitively-based styli, acoustically-based non-passive styli, magnetically-based non-passive styli, light-emitting-based non-passive styli, camera-based non-passive styli, radio-frequency-based non-passive styli, and so forth.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

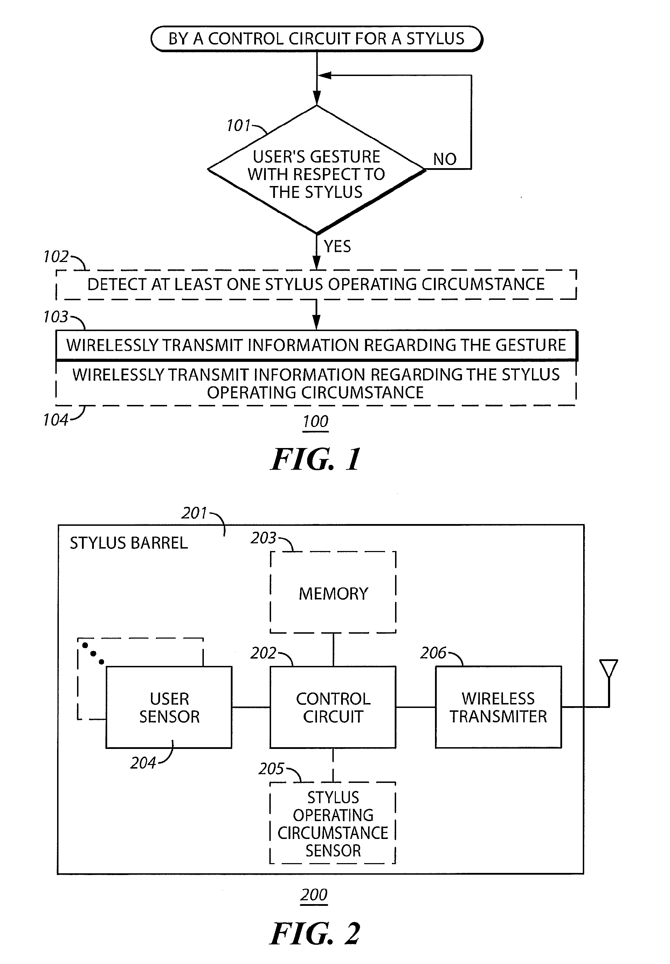

FIG. 1 presents a process 100 that accords at least in part with many of these teachings. For the sake of an illustrative example it will be presumed here that a control circuit for a stylus carries out this process 100. Again for the purpose of illustration and without intending any limitations in these regards, FIG. 2 presents an example of such a stylus 200. In particular, in this example, the stylus 200 includes a stylus barrel 201 that contains (at least in part) the aforementioned control circuit 202. In a typical application setting this stylus barrel 201 has a pen or pencil-like form factor and is shaped and configured to be comfortably grasped and manipulated by a user's hand. Styli barrels are well known in the art. As the present teachings are not overly sensitive to any particular selections in these regards, further elaboration regarding styli barrels is not provided here for the sake of brevity.

The control circuit 202 can comprise a fixed-purpose hard-wired platform or can comprise a partially or wholly programmable platform. These architectural options are well known and understood in the art and require no further description here. This control circuit 202 is configured (for example, by using corresponding programming as will be well understood by those skilled in the art) to carry out one or more of the steps, actions, and/or functions described herein.

By one optional approach the control circuit 202 operably couples to a memory 203. This memory 203 may be integral to the control circuit 202 or can be physically discrete (in whole or in part) from the control circuit 202 as desired. This memory 203 can serve, for example, to non-transitorily store the computer instructions that, when executed by the control circuit 202, cause the control circuit 202 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

In this illustrative example the control circuit 202 also operably couples to one or more user sensors 204 and a wireless transmitter 206. The user sensor 204 is also supported by the stylus barrel 201 and is configured to detect at least one user's gesture with respect to the stylus barrel 201. By one approach, for example, the user sensor 204 can comprise one or more electrically-conductive sensors (including but not limited to capacitively-based sensors as are known in the art) and/or one or more optical-based sensors (including but not limited to an image-capture component such as a camera oriented to capture images of part or all of the user's hand and/or one or more fingers or thumb). (As used herein the expression "user sensor" will be understood to not comprise a mere button, slide switch, or the like.)

The aforementioned wireless transmitter 206 can also be supported by the stylus barrel. This wireless transmitter 206 can employ a radio-frequency carrier or an optical carrier (such as an infra-red carrier) as desired. Generally speaking, for most application settings this wireless transmitter 206 need only support a short-range technology (such as, but not limited to, the BLUETOOTH^{™} standard or the unlicensed cordless-microphone spectrum). A short-range approach will suffice for many application settings as the distance between the stylus 200 and its corresponding scribing surface/stylus sensor is usually on the order of less than only a very few inches.

If desired, the stylus 200 may also optionally include a stylus operating circumstance sensor 205 that also operably couples to the control circuit 202. An example of a stylus operating circumstance sensor 205 includes, for example, an accelerometer, a tilt detector, and so forth. So configured, the control circuit 202 can be configured to detect one or more stylus operating circumstances (such as, but not limited to, an angle of inclination of the stylus 200, rotation of the stylus 200 about its longitudinal axis, and so forth).

With continued reference to FIGS. 1 and 2, such a control circuit 202 can, at 101, detect a user's gesture with respect to the stylus 200. The present teachings are highly flexible in these regards and will accommodate a wide variety of user gestures.

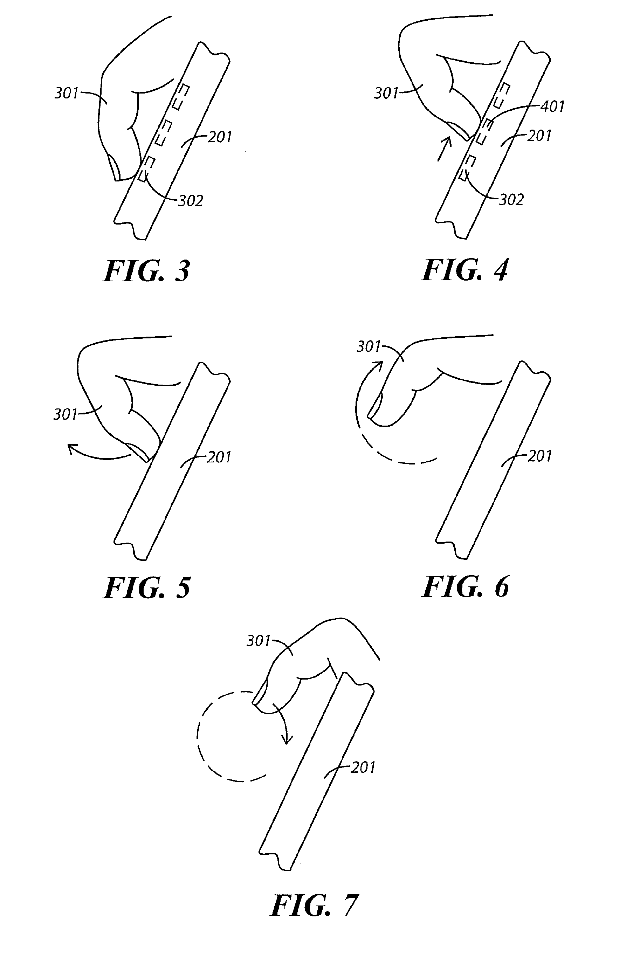

When the user sensors 204 include a plurality of capacitively-sensitive sensors 302 as shown in FIGS. 3 and 4, for example, the detected gesture can comprise movement of the user's finger 301 along the stylus barrel 201. By one approach this gesture might comprise moving the finger 301 from a forwardly-disposed position to a rearwardly-disposed position. By another approach, the complete gesture might comprise first moving the finger 301 rearwardly (as shown) and then subsequently sliding the finger 301 forwardly along the stylus barrel 201 (all within some predetermined period of time, such as 0.5 seconds, 1.0 second, 2.0 seconds, or some other duration of choice).

As another non-limiting example in these regards, when the user sensor 204 includes at least one image-capture component the gesture can comprise a lifting of the user's finger 301 from the stylus barrel 201 followed by a traversal of the finger 301 along an arcuate (in this case, essentially circular) path as illustrated in FIGS. 5-7. In this illustrative example the path of the finger 301 remains at least substantially in-line with the stylus barrel 201. These teachings will readily accommodate other approaches in these regards, however. For example, the circular path traced by the finger 301 could be at least substantially orthogonal to the longitudinal axis of the stylus barrel 201.

Returning to FIGS. 1 and 2, this process 100 will optionally accommodate at 102, if desired, detecting at least one stylus operating circumstance (using, for example, the aforementioned optional stylus operating circumstance sensor 205). As one simple, non-limiting example in these regards, the detected stylus operating circumstance could comprise, at least in part, an angle of inclination of the stylus 200 (with respect to, for example, the scribing surface upon which the stylus 200 moves). Where a given gesture might indicate that a line thickness is to change, the tilt of the stylus 200 could serve, for example, to indicate an amount by which the line thickness is to increase or decrease (either in absolute terms or in relative terms as desired).

At 103 the control circuit 202 wirelessly transmits information regarding the detected gesture. When the control circuit 202 has also detected at least one stylus operating circumstance as described above, by one approach this transmission of information can also include wirelessly transmitting information regarding that detected stylus operating circumstance along with (or separate from, as desired) the information regarding the detected gesture.

By one approach the transmitted information can represent a completed detected gesture. By another approach, if desired, the transmitted information can represent only a partial gesture (such as the beginning of a gesture, the middle of a gesture, the conclusion of a gesture, and so forth). Accordingly, depending upon the needs of a given application setting these teachings will accommodate having the stylus control circuit 202 completely identify a "gesture" and accordingly pass along via the aforementioned transmission an identified gesture signal (rather than the raw information regarding the physical aspects of the gesture itself). In such a case, and by way of an illustrative example, the control circuit 202 can transmit a message such as "increase line thickness" rather than a message such as "user finger has completed sliding backwards by at least one inch."

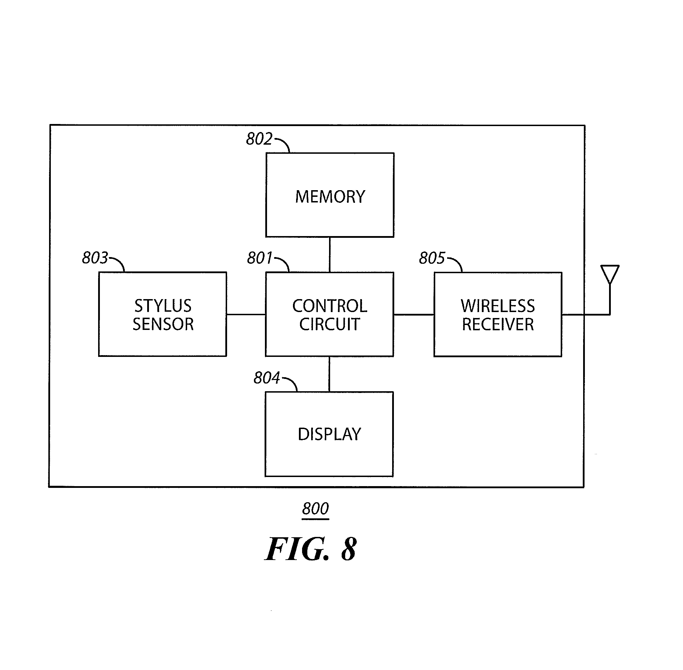

Referring to FIG. 8, a given electronic device 800 can be configured to receive and utilize the aforementioned transmission. Such a device 800 can include its own control circuit 801 that operably couples to a memory 802, a stylus sensor 803, a display 804, and a wireless receiver 805. The stylus sensor 803 can serve, for example, to detect and track the stylus's contact with and movement across a given scribing surface. The control circuit 801 can then provide a corresponding presentation of electronic ink on the display 804 that correlates to that tracked contact/movement. Such practices are very well known in the art. Accordingly, further elaboration in these regards here will not be provided for the sake of brevity.

The wireless receiver 805 is configured in this example to compatibly receive the transmissions of the aforementioned wireless transmitter 206. When the wireless transmitter 206 comprises a BLUETOOTH^{™}-compatible transmitter, for example, the wireless receiver 805 can itself comprise a BLUETOOTH^{™}-compatible receiver.

The control circuit 801 of this device 800 can be configured to interpret the received signals from the stylus 200 as regards the aforementioned detected gestures (with or without the aforementioned detected stylus operating circumstance) to thereby facilitate an additional user-input modality by which the user can control, influence, and effect, for example, the ways by which the device 800 interprets and utilizes stylus-based scribing input.

So configured, for example, a user can make changes to the ways by which the scribing information entered by the stylus 200 serves to influence a presentation of corresponding electronic ink. These changes can include such things as line width, line color, line composition (solid versus dashed, for example), geometric properties (straight line versus freehand, for example), and so forth.

Such gestures can also serve, if desired, to switch the receiving device between various input modes of operation. For example, the receiving device can be switched back and forth between a text-entry mode of operation and a drawing mode of operation as a function of such gesture detection.

Permitting the user to effect such changes via stylus-detected gestures, in turn, can preserve limited display space by avoiding the need to present buttons or the like to otherwise accommodate such user-based adjustments. These teachings can also help to avoid a need to access and utilize menu-based adjustments by permitting the user to directly effect a particular change via a stylus-detected gesture.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
by a control circuit (202) for a stylus (200):
detecting (101) a user's gesture with respect to the stylus (200);
wirelessly transmitting (103) information regarding the gesture.

2. The method of claim 1 wherein detecting the user's gesture with respect to the stylus (200) comprises, at least in part, detecting movement of a user's finger (301) along the stylus (200).

3. The method of claim 2 wherein detecting movement of a user's finger (301) along the stylus (200) comprises, at least in part, detecting movement of the user's finger (301) along the stylus (200) using, at least in part, a plurality of electrically-conductive sensors (204).

4. The method of claim 1 wherein detecting the user's gesture with respect to the stylus (200) comprises, at least in part, detecting a user's finger (301) when displaced from contact with the stylus (200).

5. The method of claim 4 wherein detecting the user's finger (301) when displaced from contact with the stylus (200) comprises, at least in part, detecting movement of the user's finger (301).

6. The method of claim 5 wherein detecting movement of the user's finger (301) comprises, at least in part, detecting the movement of the user's finger (301) using, at least in part, at least one optical-based sensor.

7. The method of claim 1 further comprising:
detecting (102) at least one stylus (200) operating circumstance;
and wherein wirelessly transmitting the information regarding the gesture comprises, at least in part, also wirelessly transmitting (104) information regarding the stylus (200) operating circumstance.

8. The method of claim 7 wherein the stylus (200) operating circumstance comprises, at least in part, an angle of inclination of the stylus (200).

9. A stylus (200) comprising:
a stylus barrel (201);
at least one user sensor (204) supported by the stylus barrel (201) configured to detect a user's gesture with respect to the stylus barrel (201);
a wireless transmitter (206) supported by the stylus barrel (201);
a control circuit (202) supported by the stylus barrel (201) and operably coupled to both the at least one user sensor (204) and the wireless transmitter (206), the control circuit (202) configured to respond to detection of a user's gesture with respect to the stylus barrel (201) by wirelessly transmitting information regarding the gesture via the wireless transmitter (206).

10. The stylus (200) of claim 9 wherein the at least one user sensor (204) is configured to detect a user's gesture comprising movement of a user's finger (301) along the stylus barrel (201).

11. The stylus (200) of claim 10 wherein the at least one user sensor (204) comprises a plurality of electrically-conductive sensors disposed along the stylus barrel (201) in a spaced relationship to one another.

12. The stylus (200) of claim 9 wherein the at least one user sensor (204) comprises at least one optical-based sensor.

13. The stylus (200) of claim 12 wherein the at least one optical-based sensor comprises an image-capture component.

14. The stylus (200) of claim 9 wherein the control circuit (202) is further configured to detect at least one stylus (200) operating circumstance and including information regarding the stylus (200) operating circumstance when wirelessly transmitting the information regarding the gesture.

15. The stylus (200) of claim 14 wherein the stylus (200) operating circumstance comprises, at least in part, an angle of inclination of the stylus (200).

## Amended claims

### Amended claims in accordance with Rule 137(2) EPC.

**1.** A method comprising:
by a control circuit (202) for a stylus (200):
detecting (101) a user's gesture with respect to the stylus (200);
wirelessly transmitting (103) information regarding the gesture, the information comprising changes to ways by which scribing information entered by the stylus serves to influence a presentation of corresponding electronic ink.

**2.** The method of claim 1 wherein detecting the user's gesture with respect to the stylus (200) comprises, at least in part, detecting movement of a user's finger (301) along the stylus (200).

**3.** The method of claim 2 wherein detecting movement of a user's finger (301) along the stylus (200) comprises, at least in part, detecting movement of the user's finger (301) along the stylus (200) using, at least in part, a plurality of electrically-conductive sensors (204).

**4.** The method of claim 1 wherein detecting the user's gesture with respect to the stylus (200) comprises, at least in part, detecting a user's finger (301) when displaced from contact with the stylus (200).

**5.** The method of claim 4 wherein detecting the user's finger (301) when displaced from contact with the stylus (200) comprises, at least in part, detecting movement of the user's finger (301).

**6.** The method of claim 5 wherein detecting movement of the user's finger (301) comprises, at least in part, detecting the movement of the user's finger (301) using, at least in part, at least one optical-based sensor.

**7.** The method of claim 1 further comprising:
detecting (102) at least one stylus (200) operating circumstance;
and wherein wirelessly transmitting the information regarding the gesture comprises, at least in part, also wirelessly transmitting (104) information regarding the stylus (200) operating circumstance.

**8.** The method of claim 7 wherein the stylus (200) operating circumstance comprises, at least in part, an angle of inclination of the stylus (200).

**9.** A stylus (200) comprising:
a stylus barrel (201);
at least one user sensor (204) supported by the stylus barrel (201) configured to detect a user's gesture with respect to the stylus barrel (201);
a wireless transmitter (206) supported by the stylus barrel (201);
a control circuit (202) supported by the stylus barrel (201) and operably coupled to both the at least one user sensor (204) and the wireless transmitter (206), the control circuit (202) configured to respond to detection of a user's gesture with respect to the stylus barrel (201) by wirelessly transmitting information regarding the gesture via the wireless transmitter (206), the information comprising changes to ways by which scribing information entered by the stylus serves to influence a presentation of corresponding electronic ink.

**10.** The stylus (200) of claim 9 wherein the at least one user sensor (204) is configured to detect a user's gesture comprising movement of a user's finger (301) along the stylus barrel (201).

**11.** The stylus (200) of claim 10 wherein the at least one user sensor (204) comprises a plurality of electrically-conductive sensors disposed along the stylus barrel (201) in a spaced relationship to one another.

**12.** The stylus (200) of claim 9 wherein the at least one user sensor (204) comprises at least one optical-based sensor.

**13.** The stylus (200) of claim 12 wherein the at least one optical-based sensor comprises an image-capture component.

**14.** The stylus (200) of claim 9 wherein the control circuit (202) is further configured to detect at least one stylus (200) operating circumstance and including information regarding the stylus (200) operating circumstance when wirelessly transmitting the information regarding the gesture.

**15.** The stylus (200) of claim 14 wherein the stylus (200) operating circumstance comprises, at least in part, an angle of inclination of the stylus (200).
